# FASCICULE DE BREVET EUROPEEN

(11) **EP 3 829 995 B1**
(45) Date de publication et mention de la délivrance du brevet: **31.07.2024**
(21) Numéro de dépôt: 19745638.7
(22) Date de dépôt: 02.08.2019
(51) Int. Cl.: B65D 41/62, G09C 1/04, B65D 55/06

(54) **BOUTEILLE SECURISÉE ET PROCÉDÉ D'AUTHENTIFICATION CORRESPONDANT**
SICHERE FLASCHE UND ZUGEHÖRIGES AUTHENTIFIZIERUNGSVERFAHREN
SECURE BOTTLE AND CORRESPONDING AUTHENTICATING METHOD

(30) Priorité: 02.08.2018 FR 1857265
(43) Date de publication de la demande: 09.06.2021
(73) Titulaire: SURYS, 77607 Marne la Vallee Cedex 3 (FR)
(72) Inventeur: SOUPARIS, Hugues, 75012 PARIS (FR)
(74) Mandataire: Bouvier, Thibault
(86) Numéro de dépôt international: PCT/EP2019/070880
(87) Numéro de publication internationale: WO 2020/025791

(56) Documents cités:
- WO-A1-2014/087302
- WO-A1-2016/207549
- WO-A1-94/18087
- US-A- 2 079 757

## Description

### DOMAINE DE L'INVENTION

La présente invention concerne le domaine de la sécurisation de la distribution des produits mis en récipients.

Dans ce domaine, la présente invention vise à protéger au moins l'un parmi :
- le contenant, c'est à dire un récipient fermable, et
- le contenu du récipient fermable.

Elle permet de protéger la réutilisation indue du contenant ou du contenu.

La présente invention s'applique à tout récipient fermable ; que ce soit dans le domaine du luxe, par exemple en parfumerie, dans le domaine des vins et spiritueux, des produits chimiques, de la pharmacie, de la cosmétique, etc.

Le contenu se présente par exemple sous forme de liquide, de gaz, de gel, de crème, de poudre, de granules, sous forme pulvérulente, etc.

Par souci de concision, seul un exemple non limitatif concernant les vins et spiritueux, dans lequel le contenant est une bouteille, sera décrit ici.

Au sens de la présente invention, par « bouteille », ou indistinctement flacon, on entend :
- un récipient fermable,
- un élément de fermeture dudit récipient, et
- le contenu dudit récipient,
- le récipient étant fermé par ledit élément de fermeture.

Il est connu que certains utilisateurs frauduleux produisent 2 bouteilles à partir d'une bouteille authentique :
- une première bouteille dont le contenant (bouteille) est contrefaisant mais le contenu (liquide) est authentique, et
- une deuxième bouteille dont le contenant (bouteille) est authentique mais le contenu (liquide) est contrefaisant.

Certains récipients sont en outre enrobés d'un emballage secondaire, par exemple sous forme de manchon de préférence thermo-rétractable ou en quasi-contact avec la bouteille qui entoure tout ou partie du récipient.

La présente invention vise à réduire les risques de fraude en garantissant d'une part l'authenticité de la bouteille et son identification (via un identifiant unique), et en garantissant d'autre part l'authenticité du packaging secondaire en interdisant :
- les reconditionnements abusifs, par exemple pour des bouteilles authentiques identiques destinées à des marchés différents et qui ne se distinguent que par des manchons différents ou par une information qui n'est modifiable qu'à condition de supprimer temporairement le manchon,
- toute tentative d'accès malveillant à la bouteille par exemple pour changer l'étiquette de la face avant d'une bouteille (généralement conçue pour être retirée facilement), par exemple dans le cas d'un manchon qui englobe la quasi-totalité du récipient,
- toute tentative de recyclage d'une bouteille authentique après consommation (le manchon d'origine ayant très probablement été perdu et/ou son repositionnement à l'identique délicat/improbable...).

Différentes solutions existent sur le marché, par exemple par l'impression d'étiquettes de sécurité (codes 2D, hologrammes, etc.), l'apposition de sceaux sur le bouchon, la mise en oeuvre de double identifiants, etc.

Par exemple, il est connu le document WO2016207549 qui propose une bouteille comprenant une étiquette de sécurité qui comporte une première partie fixée au bouchon et une deuxième partie fixée au col de la bouteille, et qui comporte une zone de pré-rupture. L'étiquette porte un premier code à lecture optique, visible en toutes circonstances, et notamment sans qu'il soit besoin de retirer la capsule ; et un deuxième code disposé de telle manière que celui-ci reste invisible avant le retrait de la coiffe de la bouteille. Les codes sont associés dans la base de données afin de vérifier l'authenticité de la bouteille par un consommateur, par transmission à la base de données du premier code et, après retrait de la capsule, du deuxième code. Après vérification de la correspondance entre les premier et deuxième codes stockés dans la base de données, un serveur peut renvoyer une information confirmant l'authenticité de la bouteille.

Cette solution implique la nécessite d'une étiquette de sécurité, et ne protège pas contre le risque de reproduction de l'étiquette de sécurité,

Une bouteille selon le préambule de la revendication 1 est connue du document US 2,079,757.

La présente invention vise à proposer une solution alternative, et plus efficace.

### RESUME DE L'INVENTION

Plus précisément, l'invention concerne selon un premier de ses objets, une bouteille comprenant :
- un récipient,
- un élément de fermeture dudit récipient, et
- le contenu dudit récipient, ledit récipient étant fermé par ledit élément de fermeture.

Elle est essentiellement caractérisée en ce qu'elle comprend en outre :
- une étiquette de sécurité comprenant un premier ensemble d'au moins un élément d'authentification optique comprenant un identifiant, l'étiquette de sécurité étant solidaire d'au moins l'un parmi le récipient et l'élément de fermeture.
- un élément de recouvrement recouvrant au moins partiellement l'étiquette de sécurité, et au moins partiellement au moins l'un parmi : le récipient et l'élément de fermeture dudit récipient,
   et en ce que
- l'élément de recouvrement est disposé de sorte qu'au moins un élément d'authentification optique de l'étiquette de sécurité peut être observé simultanément avec une partie au moins dudit élément de recouvrement,
et en ce que l'élément de recouvrement
- Est solidaire au moins de l'élément de fermeture,
- Est au moins partiellement transparent et comprend un ensemble d'au moins un élément de marquage, et
- est disposé de sorte que l'étiquette de sécurité peut être observée en transparence à travers celui-ci.

De préférence, l'élément de recouvrement épouse la forme extérieure de la bouteille.

L'élément de recouvrement est un manchon, en particulier un manchon thermo-rétractable.

On peut prévoir que l'élément de recouvrement comprend un élément de sécurité anti-contrefaçon.

On peut prévoir que l'identifiant de l'étiquette de sécurité est unique et que l'étiquette de sécurité comprend, outre le premier ensemble d'au moins un élément d'authentification optique, un deuxième ensemble d'au moins un élément d'identification.

Avantageusement, on prévoit de réaliser une empreinte de l'étiquette de sécurité, et de l'enregistrer dans une base de données en correspondance avec au moins l'identifiant de l'étiquette de sécurité.

Dans un mode de réalisation, l'élément de recouvrement, par superposition au premier ensemble d'au moins un élément d'authentification optique, de l'étiquette de sécurité modifie localement l'apparence de celui-ci.

Dans un mode de réalisation le manchon comporte un élément de marquage générique, c'est-à-dire commun à un ensemble de bouteilles.

Selon l'invention, l'élément de marquage comprend au moins un parmi: un motif prédéterminé, par exemple générique, réalisé de préférence en amont de la pose dudit manchon, un marquage laser ou marquage jet d'encre ou encore un marquage par transfert thermique, unique ou de série, réalisé de préférence au moment de la pose du manchon, un filigrane digital, une pré-découpe sous forme par exemple de pointillés continus dans un sens prédéterminé, et un ensemble d'éléments inducteurs de déformation optique par observation en transmission, par exemple des bulles, des lentilles concaves ou convexes.

Dans un mode de réalisation, au moins l'un parmi l'étiquette de sécurité et l'élément de recouvrement comprend une prédécoupe, avantageusement utilisable comme élément de marquage.

On peut prévoir que l'étiquette de sécurité comprend au moins l'un parmi :
- Un élément d'authentification, et
- Un élément de traçabilité.

Dans un mode de réalisation, l'étiquette de sécurité comprend par exemple une empreinte, calculée et enregistrée comme une caractéristique additionnelle dans une base de données.

Dans un mode de réalisation, l'empreinte de l'étiquette de sécurité est calculée après apposition de celle-ci sur la bouteille. Alternativement, l'empreinte de l'étiquette de sécurité peut être calculée avant la pose de celle-ci sur la bouteille.

De préférence, l'étiquette de sécurité est au moins partiellement destructible et/ou modifiable définitivement. De préférence cette modification signe soit l'ouverture du récipient, soit une tentative malintentionnée d'arrachement par exemple pour remplacer tout ou partie de l'emballage primaire.

Par exemple, l'étiquette de sécurité présente au moins une des caractéristiques de résistance au décollement ou à l'arrachement parmi :
- une prédécoupe,
- une couche ou un matériau porteur intrinsèquement destructible et/ou modifiable définitivement.

Selon un autre de ses objets, l'invention concerne un procédé de sécurisation d'une bouteille selon l'invention, comprenant une étape consistant à :
Enregistrer dans une mémoire d'un serveur sécurisé au moins l'une parmi :
* une image de référence, ladite image de référence étant une prise de vue de
   - l'étiquette de sécurité observée en transparence à travers le manchon ; et
   - d'au moins un élément de marquage du manchon ; et
* une empreinte numérique de l'image de référence;
le procédé comprenant optionnellement en outre une étape consistant à enregistrer dans une mémoire du serveur sécurisé au moins l'une parmi :
* une image initiale, ladite image initiale étant une prise de vue de l'étiquette de sécurité ; et
* une empreinte numérique de l'image initiale.

On peut prévoir que l'empreinte numérique de l'image de référence est encryptée ou encodée.

On peut prévoir des étapes consistant à :
- Enregistrer dans une mémoire d'un serveur sécurisé au moins une image test de la bouteille, ladite image test étant une prise de vue de :
   - l'étiquette de sécurité observée en transparence à travers le manchon ; et
   - d'au moins un élément de marquage du manchon ;
- Calculer une empreinte numérique de l'image test ; et
- Comparer ladite image test à ladite image de référence, ou l'empreinte numérique de l'image test à l'empreinte numérique de l'image de référence ;
le procédé comprenant optionnellement une étape consistant à redresser l'image test, préalablement au calcul de l'empreinte de l'image test.

Dans un mode de réalisation, l'étape d'enregistrement préalable est mise en oeuvre au plus tard à la mise dans le commerce de la bouteille ; et l'étape de comparaison est mise en oeuvre au plus tôt à la mise dans le commerce de la bouteille.

Selon un autre de ses objets, l'invention concerne un programme d'ordinateur comprenant des instructions de code de programme pour l'exécution des étapes du procédé selon l'invention, lorsque ledit programme est exécuté sur un ordinateur.

En particulier, l'ordinateur peut être un smartphone. Même si l'authentification peut être réalisée au choix sur le smartphone ou sur un serveur, le smartphone peut avantageusement servir alors uniquement de dispositif d'acquisition d'image test et de transmission.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

- la figure 1 illustre un mode de réalisation d'une bouteille de champagne selon l'invention,
- la figure 2 illustre un mode de réalisation d'une bouteille de vin selon l'invention,
- la figure 3 illustre un mode de réalisation d'une étiquette de sécurité selon l'invention,
- la figure 4 illustre certains points remarquables selon l'invention sur une étiquette de marquage de la bouteille de champagne de la figure 1, et
- la figure 5 est un agrandissement de la zone A en pointillés de la figure 1, qui illustre une étiquette de sécurité selon l'invention vue en transparence à travers un manchon.

### DESCRIPTION DETAILLEE

Comme vu précédemment, une bouteille 100 comprend un récipient 10 fermable et un élément de fermeture 20 dudit récipient 10.

L'élément de fermeture 20 se présente par exemple sous la forme de bouchon dit de sécurité, c'est-à-dire irréversiblement déformable ou destructible s'il est séparé de la bouteille 100, d'une capsule, éventuellement pourvu en outre d'une coiffe (par exemple pour des bouteilles de cidre, de champagne, ...), etc.

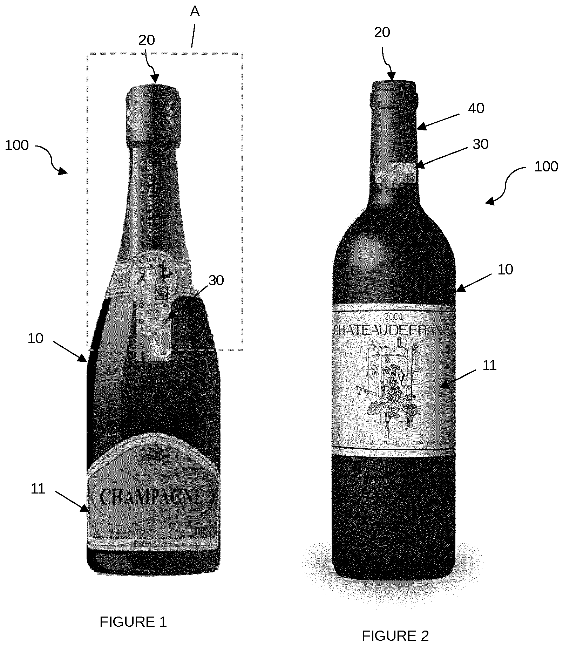

Le récipient 10 comprend, par exemple dans le cas d'une bouteille 100, voir par exemple figure 1 et figure 2, au moins l'un des éléments parmi :
- un goulot, comprenant typiquement
   ∘ une bague, par exemple en anneau, cordon, pleine ou carrée, et
   ∘ un col, par exemple droit ou enflé,
- une épaule, par exemple tombante, arrondie ou droite,
- un corps, également appelé aussi fût ou ventre, par exemple droit, conique, cylindrique, renflé, etc.,
- un talon,
- un fond, par exemple droit ou piqué.

Le récipient 10 peut comprendre une étiquette de marquage 11.

La bouteille 100 comprend également une étiquette de sécurité 30.

### Etiquette de sécurité

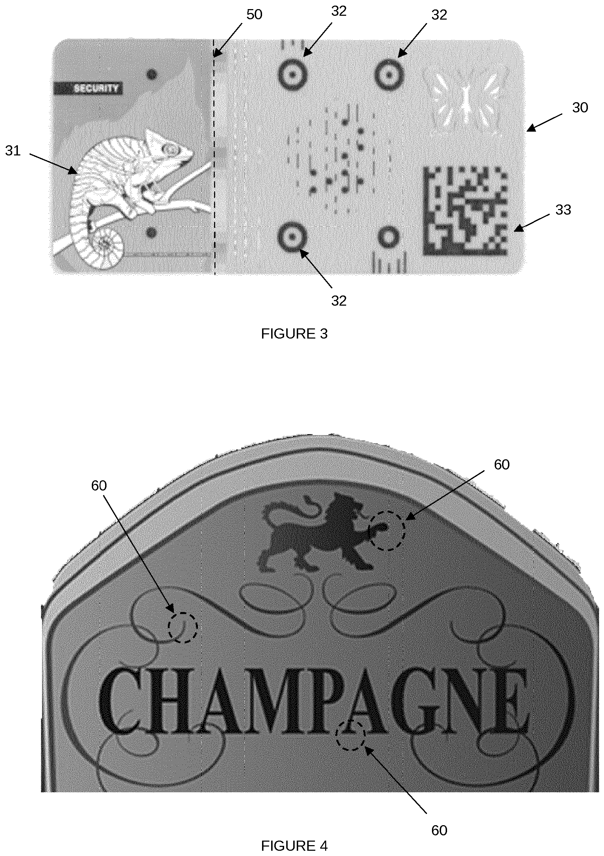

L'étiquette de sécurité 30 (voir notamment figure 3) comprend un identifiant 33, par exemple un numéro ou un code-barres, en particulier un code-barres 2D. L'identifiant est unique, par exemple par bouteille 100 ou par lot de bouteilles. L'identifiant peut également servir d'élément de traçabilité, en particulier au sens de suivi logistique défini par la norme ISO 22300-2018. Il peut se présenter sous forme d'un code barre 1D ou 2D, optionnellement encrypté, ou d'un marquage OCR, de préférence résistant à la destruction de l'étiquette, par exemple un marquage indélébile en surface.

De préférence, l'étiquette de sécurité 30 comprend également un premier ensemble d'au moins un élément de marquage.

Un élément de marquage est un élément d'identification ou de décoration, ou d'authentification 31, c'est-à-dire un élément graphique observable par un capteur optique.

L'étiquette de sécurité 30 est solidaire du récipient 10 et de l'élément de fermeture 20.

Par exemple, on peut prévoir que l'étiquette de sécurité 30 est collée sur l'un au moins parmi le goulot, l'épaule et le corps du récipient 10, et sur la capsule ou la coiffe de l'élément de fermeture 20 (non illustré).

En l'espèce, un l'étiquette de sécurité 30 est à la fois un élément de scellage et un élément d'authentification.

On prévoit de réaliser et d'enrôler une empreinte de l'étiquette, comme décrit ultérieurement. De préférence, l'enrôlement de l'empreinte de l'étiquette est réalisé avant son apposition sur la bouteille 100.

L'étiquette de sécurité 30 peut être l'étiquette collée sur l'un au moins parmi le goulot, l'épaule et le corps du récipient 10, mentionnée en début de description ; ou une étiquette ad *hoc,* et peut également comprendre un élément de marquage.

L'étiquette de sécurité 30, également connue sous l'appellation d'étiquette inviolable ou auto destructive, est de préférence au moins partiellement destructible et/ou modifiable définitivement.

On peut prévoir que l'étiquette de sécurité 30 comprend une prédécoupe 50, ce qui amène une sécurité supplémentaire. En effet, toute tentative d'ouverture de la bouteille 100 peut entraîner la découpe de l'étiquette de sécurité 30 le long de la prédécoupe 50, ce qui donne une indication visuelle de tentative de fraude très facile à identifier.

De préférence, l'étiquette de sécurité 30 comprend un élément d'authentification 31, par exemple un des éléments suivants ou une combinaison d'au moins un des éléments suivants :
- un élément optiquement variable tel qu'un hologramme (par exemple le caméléon sur la figure 3),
- une encre de sécurité optiquement variable
- un graphisme de sécurité (filigrane digital, impression très haute définition)
- etc.

Ce qui permet de faciliter un contrôle très sécurisé pour un contrôleur non expérimenté et sans compétence particulière, par exemple un consommateur, équipé d'un outil de contrôle générique tel qu'un smartphone classique.

Par ailleurs d'autres marquages peuvent également être associés pour des contrôles plus poussés en laboratoire tels qu'une encre visible uniquement dans une bande spectrale donnée, une encre sensible à une excitation particulière (humidité, température, pression, ...).

Dans un mode de réalisation, l'étiquette de sécurité 30 est une étiquette de taxe, émise par une autorité fiscale.

De préférence, l'étiquette de sécurité 30 est apposée au moment de la fermeture de la bouteille 100, après application de l'élément de fermeture 20.

De préférence également, elle est disposée à cheval sur l'élément de fermeture 20 et le corps de la bouteille 100, pour interdire la désolidarisation de l'élément de fermeture 20 et de la bouteille 100.

Dans le cas où la bouteille 100 comprend une étiquette de sécurité 30, l'élément de recouvrement décrit ci-dessous présente une longueur de préférence supérieure à la longueur de l'ensemble (élément de fermeture 20 + étiquette de sécurité 30) de sorte à les recouvrir au moins partiellement, et de préférence intégralement.

### Elément de recouvrement

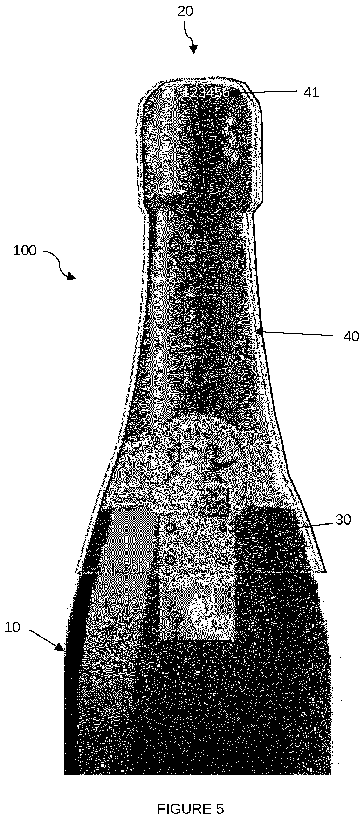

On prévoit également que la bouteille 100 comprend en outre un élément de recouvrement 40, en l'espèce un manchon, recouvrant au moins partiellement l'étiquette de sécurité 30, voir par exemple figure 5 où la partie supérieure de l'étiquette de sécurité 30 est vue en transparence travers le manchon 40. Par concision, l'élément de recouvrement 40 sera appelé manchon ci-après.

Le manchon peut, en outre, recouvrir au moins partiellement, et éventuellement totalement, au moins l'un parmi le récipient 10 et l'élément de fermeture 20.

Le manchon peut être numéroté, notamment par un identifiant unique, de préférence enregistré dans une mémoire, ce qui peut constituer un élément d'authentification supplémentaire lorsque cet identifiant lu par un capteur optique et reconnu par un logiciel de traitement de l'image obtenue.

De préférence, le manchon est immobile par rapport à l'un au moins parmi le récipient 10 et l'élément de fermeture 20. Par exemple, le manchon est thermorétractable. Il peut être réalisé à base de polymère de polyéthylène téréphtalate (PET), par exemple tel que décrit dans le document WO2003016050.

Le manchon est au moins partiellement transparent et comprend un ensemble d'au moins un élément de marquage 41, c'est-à-dire au moins un élément d'identification ou de décoration solidaire dudit manchon, et par conséquent solidaire de l'étiquette de sécurité 30.

Selon l'invention, l'ensemble d'au moins un élément de marquage 41 du manchon 40 comprend au moins l'un parmi :
- un motif prédéterminé, par exemple générique, réalisé de préférence en amont de la pose dudit manchon,
- un marquage laser ou marquage jet d'encre ou encore un marquage par transfert thermique, unique ou de série, réalisé de préférence au moment de la pose du manchon,
- un filigrane digital,
- une pré-découpe sous forme par exemple de pointillés continus dans un sens prédéterminé, en l'espèce longitudinal (illustrée en pointillés au-dessus de l'étiquette de sécurité sur la figure 5), et
- un ensemble d'éléments inducteurs de déformation optique par observation en transmission, par exemple des bulles, des lentilles concaves ou convexes.

De préférence, le manchon est disposé de sorte que l'intégralité de l'étiquette de sécurité 30 peut être observée en transparence à travers le manchon.

Alternativement au manchon, ou en combinaison avec celui-ci, la bouteille 100 peut comprendre un muselet, c'est-à-dire une armature de fil métallique dont on coiffe certains bouchons, par exemple pour des bouteilles de champagne, de mousseux, de cidre ou de bière. Dans le cas où la bouteille 100 comprend un manchon et un muselet, le manchon est disposé de préférence par-dessus le muselet.

### Enrôlement

On prévoit de réaliser :
- une étape d'enrôlement de l'étiquette de sécurité 30 et
- une étape d'enrôlement de la bouteille 100, celle-ci étant munie de l'étiquette de sécurité 30 et du manchon.

L'enrôlement consiste à :
- réaliser une image numérique par un capteur optique, par exemple un appareil photo numérique, une caméra, en particulier placée sur une ligne de fabrication, le capteur optique étant éventuellement intégré, notamment à un objet communicant,
- mettre en oeuvre une étape de traitement de l'image numérique visant à en calculer une empreinte,
- enregistrer l'empreinte, et éventuellement l'image numérique, dans une base de données.

A cet effet, le capteur optique est disposé à une distance comprise entre une distance minimale prédéterminée et distance maximale prédéterminée, de sorte que l'étiquette de sécurité 30 entre de préférence systématiquement dans le champ de prise de vue du capteur optique.

L'étape d'enrôlement de l'étiquette de sécurité 30 permet de générer une image appelée image initiale.

On peut alors réaliser, c'est-à-dire calculer, une empreinte numérique de l'image initiale.

Pour l'enrôlement de la bouteille 100, on prévoit que l'étiquette de sécurité 30 et au moins un élément de marquage du manchon entrent simultanément dans le champ de prise de vue du capteur optique.

On peut prévoir que l'étiquette de sécurité 30 et la bouteille 100, prise au moins dans sa plus petite dimension, entrent simultanément dans le champ de prise de vue du capteur optique. Par exemple si la bouteille 100 est fine, c'est-à-dire dont la hauteur est supérieure à sa largeur, alors on prévoit que l'image comprend l'étiquette de sécurité 30 et la bouteille 100 prise au moins dans toute sa largeur.

On peut prévoir que la bouteille 100 entre intégralement dans le champ de prise de vue du capteur optique, l'étiquette de sécurité 30 étant dans la ligne de visée.

Grâce à cette prise de vue, le capteur optique réalise ainsi une image numérique de la bouteille 100 comprenant :
- l'étiquette de sécurité 30, et
- au moins une partie du manchon.

Cette image est appelée image de référence. Elle est réalisée de préférence au plus tard à la mise dans le commerce de la bouteille 100.

En fonction de la nature du manchon et de sa position relative par rapport à l'étiquette de sécurité 30 :
- soit la superposition du manchon sur l'étiquette de sécurité 30 modifie localement l'apparence de celle-ci, et cette modification optique est comprise dans l'image de référence ;
- soit la superposition du manchon sur l'étiquette de sécurité 30 ne modifie pas l'apparence de l'étiquette de sécurité 30, et l'image de référence comprend à la fois l'image de l'étiquette de sécurité 30 et l'image d'au moins un élément de marquage du manchon.

Ainsi, quelle que soit la position relative du manchon et de l'étiquette de sécurité 30, l'image de référence est nécessairement différente de l'image initiale.

On peut alors réaliser, c'est-à-dire calculer, une empreinte numérique de l'image de référence.

### Calcul d'empreinte

L'empreinte numérique de l'image initiale ou de référence est de préférence enregistrée dans une mémoire d'un serveur sécurisé. L'image initiale ou de référence peut également y être enregistrée.

On obtient donc :
- une première empreinte correspondant à l'empreinte de l'image initiale, c'est-à-dire de l'étiquette de sécurité 30 seule, et
- une deuxième empreinte correspondant à l'empreinte de l'image de référence, c'est-à-dire de l'étiquette de sécurité 30 observée à travers le manchon.

Le même principe de calcul d'empreinte étant utilisé pour l'image initiale et pour l'image de référence ; par concision, on utilisera ci-après, sauf précision contraire, uniquement le terme « image » en place de « image de référence » et « image initiale ». On peut toutefois prévoir que le programme d'ordinateur, ou l'algorithme utilisé pour le calcul de l'empreinte de l'image initiale est différent de celui utilisé pour le calcul de l'empreinte de l'image de référence.

L'empreinte numérique de l'image peut être calculée sur le serveur sécurisé, ou calculée par un calculateur programmable, ou programmé, en connexion informatique avec le capteur optique.

Une première étape de l'étape de calcul de l'empreinte de l'image consiste à définir un ensemble de points remarquables sur l'image.

### Points remarquables

Un point remarquable 60, encerclé en pointillé sur la figure 4, est défini comme un point de l'image, c'est-à-dire un pixel ou un ensemble de pixels adjacents deux à deux, pour lequel le gradient de contraste, selon une direction et une distance prédéfinies, est supérieur à une valeur seuil prédéfinie.

Un élément de marquage de la bouteille 100 présente une particularité optique non uniforme qui génère au moins un point remarquable 60 sur l'image. Un point remarquable 60 sur l'image correspond donc à tout ou partie d'un élément de marquage de la bouteille 100.

Par exemple, pour un récipient 10 dont le moule de fabrication comprend un relief définissant un motif, un point remarquable 60 peut être défini sur l'image dudit motif du récipient 10.

Pour un récipient 10 comprenant au moins une étiquette, un point remarquable 60 peut être défini grâce à un caractère alphanumérique ou kanji de l'étiquette, la forme ou un bord de l'étiquette, ou encore un élément du décor de l'étiquette.

Un point remarquable 60 peut également être purement graphique, comme par exemple un point d'un filigrane, un point du décor du récipient 10, du motif ou d'une photographie imprimée, par exemple par impression sur une étiquette ou par sérigraphie, sur le récipient 10, etc.

Par exemple si l'étiquette comprend une photographie d'une personne, on peut prévoir une étape de reconnaissance biométrique qui permet de définir un ensemble de points biométriques. Un point biométrique permet de définir un point remarquable 60.

Plus généralement, des points remarquables peuvent être des éléments graphiques situés dans un environnement aux caractéristiques physiques ou mathématiques (en traitement d'images) particulières, comme par exemple des éléments graphiques autour desquels un gradient intense ou nul se forme, ou qui répondent à des critères de traitement d'images tels que les détecteurs de Stephen-Harris. Par gradient « intense », on entend un gradient dont la valeur est supérieure à une valeur seuil prédéterminée.

Comme vu précédemment, l'étiquette de sécurité 30 comprend au moins un identifiant et éventuellement un ensemble d'éléments de marquage. Ainsi, tout ou partie de l'identifiant, et le cas échéant de l'ensemble d'éléments de marquage, peuvent constituer des points remarquables.

Comme l'étiquette de sécurité 30 est nécessairement au moins partiellement visible sur l'image de référence, et que le manchon comprend un ensemble d'éléments de marquage, l'image de référence comprend des points remarquables correspondant à l'étiquette de sécurité 30 et des points remarquables correspondant aux éléments de marquage du manchon.

### Sélection

On prévoit ensuite de sélectionner sur l'image au moins un premier point remarquable 60 et un deuxième point remarquable 60 parmi l'ensemble points remarquables définis.

Toutefois, sur l'image de référence, on prévoit de sélectionner un ensemble de points remarquables tels que :
- une partie des points remarquables sélectionnés correspondent à l'étiquette de sécurité 30 ; et
- une partie des points remarquables sélectionnés correspondent au manchon.

### Attributs

A partir de l'ensemble des points remarquables sélectionnés, on prévoit une étape consistant à calculer un ensemble d'attributs qui concourent au caractère identifiable, voire unique, de l'image.

Les attributs comprennent un ensemble de métriques, c'est-à-dire par exemple un ensemble de distances ou angles entre certains points remarquables.

Les attributs comprennent par exemple les coordonnées de points remarquables (par rapport à un repère prédéterminé), les distances entre certains points remarquables, des valeurs de gradient de contraste autour des points remarquables, etc.

La position d'un point remarquable 60 prédéterminé de l'image peut également être un attribut, par exemple un point remarquable 60 peut être :
- un bord de l'image,
- un repéré calculé biométriquement,
- un bord d'étiquette,
- un bord de décor,
- etc.

Pour une photographie d'une personne ou d'un animal, des attributs peuvent être par exemple des éléments usuels de biométrie tels que des rapports de distance entre les positions des yeux, du nez, de la commissure des lèvres ou du centre de la bouche ou du museau, ou des angles entre ces mêmes éléments, etc.

Pour une photographie ou une représentation graphique, par exemple d'un château, des attributs peuvent être par exemple des rapports de distance entre des éléments prédéterminés, par exemple les positions de fenêtres, de tours, de drapeaux, etc.

Les attributs peuvent être calculés grâce à des logiciels ou librairies logicielles connus.

On peut aussi utiliser l'algorithme dit SIFT pour "Scale Invariant Feature Transform" en anglais, ou l'algorithme dit SURF pour "Speeded Up Robust Features" en anglais, qui sont tous deux des descripteurs locaux qui consistent, dans un premier temps, à détecter un certain nombre de points remarquables dans l'image, pour ensuite calculer un descripteur décrivant localement l'image autour de chaque point remarquable 60. La qualité du descripteur est mesurée par sa robustesse aux changements possibles que peut subir une image, par exemple un changement d'échelle et une rotation.

Pour l'algorithme SIFT, décrit notamment dans la publication D. Lowe. Object récognition from local scale-invariant features. IEEE International Conférence on Computer Vision, pages 1150-1157, 1999, la détection des points est basée sur les différences des gaussiennes (DoG) obtenues par le calcul de la différence entre chaque couple d'images lissées par un filtre gaussien, en variant à chaque fois le paramètre sigma (c'est à dire la déviation standard) du filtre. Les DoG peuvent être calculé pour différents niveaux d'échelle permettant d'introduire la notion de l'espace d'échelle. La détection des potentielles zones de points d'intérêt / points remarquables s'effectue en recherchant les extrema selon le plan de la dimension de l'image (x,y) et le plan du facteur d'échelle. Ensuite une étape de filtrage est nécessaire pour supprimer les points non pertinents, en éliminant par exemple les points dont le contraste est trop faible.

Le calcul du descripteur SIFT s'effectue sur une zone autour de chaque point d'intérêt par exemple de 16x16 pixels, subdivisée en 4x4 zones de 4x4 pixels. Sur chacune des 16 zones, un histogramme des orientations du gradient basé sur 8 intervalles est alors calculé. La concaténation des 16 histogrammes donne un vecteur descripteur de 128 valeurs.

Pour l'algorithme SURF, décrit notamment dans la publication H. Bay, T. Tuylelaars, and L. Van Gool. Surf : Speeded up robust features. European Conférence on Computer Vision, pages 404-417, 2006, la méthode consiste à utiliser le déterminant de la matrice Hessienne, à calculer une approximation des dérivées secondes des gaussiennes de l'image par le biais de filtres à différentes échelles en utilisant des masques de différentes tailles (par exemple 9x9, 15x15, 21x21, ...). Pour le calcul de l'orientation des points et les descripteurs autour des points, le principe est basé sur les sommes des réponses des ondelettes de Haar horizontales et verticales ainsi que leurs normes. La zone circulaire de description est divisée là encore en 16 régions. Une analyse en ondelettes est effectuée sur chaque région afin de construire le descripteur final. Ce dernier est constitué de la somme des gradients en x et en y ainsi que de la somme de leur norme respective pour l'ensemble des 16 régions. Le vecteur descripteur est ainsi constitué de 64 valeurs qui représentent des propriétés extraites à la fois dans l'espace normal et dans celui des échelles de grandeur.

De préférence, on prévoit une étape consistant à classer les attributs selon un ordre de priorité de vraisemblance, ce qui permet par exemple ne sélectionner que les plus efficaces, notamment pour détecter une éventuelle manipulation de l'image.

On peut prévoir de rejeter un attribut, c'est-à-dire de ne pas le sélectionner, si celui-ci présente une métrique supérieure ou inférieure à une valeur prédéterminée, ou une plage de valeurs prédéterminée. Par exemple la distance entre un bord d'étiquette et une inscription prédéterminée, entre un élément graphique et un élément textuel, etc. Ce qui limite notamment le risque de fausses étiquettes.

On peut donc prévoir une étape consistant à sélectionner tout ou partie des attributs calculés.

De préférence, on prévoit de sélectionner un nombre d'attributs supérieurs à une valeur seuil enregistrée dans une mémoire. Plus les métriques (nombre d'attributs) sont nombreuses et différentes les unes des autres, plus le taux de confusion diminue.

### Empreinte numérique

L'ensemble des attributs sélectionnés définit une empreinte numérique de l'image.

Une fois les attributs sélectionnés, on peut alors enregistrer ladite empreinte numérique de l'image dans une mémoire. En l'espèce, l'empreinte numérique est enregistrée sous forme de vecteur de données dans une mémoire temporaire. Typiquement, le vecteur de données comprend les valeurs des attributs sélectionnés, juxtaposées deux à deux.

Un avantage de sécurité de calcul de l'empreinte numérique de l'image, en particulier de l'image de référence, est alors que seul le responsable de l'application du manchon sur la bouteille 100 est détenteur de l'empreinte de la bouteille 100, telle que prête à partir dans le circuit de distribution.

L'empreinte numérique de l'image, en particulier de l'image de référence, permet ultérieurement la vérification de l'authenticité de la bouteille 100, typiquement après la mise dans le commerce de celle-ci.

### Authentification

Pour authentifier une bouteille 100 ainsi sécurisée, typiquement après la mise dans le circuit de distribution ou mise dans le commerce de celle-ci, on peut prévoir de réaliser une image test de la bouteille 100.

Une image test est une image de la bouteille 100 réalisée ultérieurement à l'image de référence. Typiquement, l'image test est réalisée par exemple par un service de contrôle ou de qualité, éventuellement interne ; par un distributeur ou encore par un acheteur.

L'image test peut donc être réalisée par les mêmes moyens (capteur optique, programme d'ordinateur) que ceux utilisés pour l'image de référence, ou par des moyens totalement différents, par exemple le capteur optique d'un objet communicant (téléphone portable, smartphone, tablette, etc.), en particulier l'objet communicant d'un acheteur.

Pour la réalisation des images test, on prévoit que l'étiquette de sécurité 30 et au moins un élément de marquage du manchon entrent simultanément dans le champ de prise de vue du capteur optique.

On peut prévoir que la bouteille 100 entre intégralement dans le champ de prise de vue du capteur optique, l'étiquette de sécurité 30 étant dans la ligne de visée.

On peut envisager de prendre un ensemble d'images test par bouteille 100, par exemple une image d'ensemble et une image locale, l'image locale correspondant à un zoom de l'image d'ensemble ou un sous-ensemble de celle-ci, ce qui permet notamment de résoudre le cas où l'empreinte globale est calculée sur une plus grande surface que l'empreinte de l'étiquette.

On peut aussi prévoir de réaliser une séquence vidéo, chaque image test étant une trame de la séquence vidéo.

On peut prévoir une étape de recadrage, c'est-à-dire que l'empreinte numérique de l'image test est calculée à partir d'une sélection d'une partie de l'image test, ce qui augmente la vitesse de calcul. En l'espèce, on prévoit de sélectionner un sous-ensemble de l'image test qui comprend l'étiquette de sécurité 30 et une zone périphérique de celle-ci, dont la forme et les dimensions sont prédéterminées, par exemple grâce à un rapport d'homothétie.

L'empreinte numérique de chaque image test est calculée de manière identique, de préférence avec le même programme d'ordinateur, ou au moins les mêmes algorithmes, que celui utilisé pour le calcul de l'empreinte numérique de l'image de référence. Par exemple le programme d'ordinateur est stocké sur un serveur distant où l'image test et l'image de référence sont envoyées. Alternativement, le même programme d'ordinateur peut être téléchargé sur un premier calculateur programmable pour le calcul de l'empreinte numérique de l'image de référence, et sur un deuxième calculateur programmable pour le calcul de l'empreinte numérique de l'image test afin de sélectionner les mêmes attributs.

On peut alors prévoir une étape de comparaison consistant à comparer l'empreinte numérique de l'image test et au moins l'une parmi l'empreinte numérique de l'image de référence et l'empreinte numérique de l'image initiale.

Si au moins un attribut de l'empreinte numérique de l'image test est identique à un attribut de l'empreinte numérique de l'image de référence, alors la bouteille 100 n'a pas été ouverte.

A l'inverse si la bouteille 100 a été ouverte, alors l'élément de fermeture 20 du récipient 10 a été désolidarisé du récipient 10. Par conséquent, la position relative de l'étiquette de sécurité 30 et d'au moins un élément de marquage du manchon aura varié, donc les points remarquables respectifs auront des positions différentes, donc l'empreinte de l'image test sera différente de l'empreinte de l'image de référence.

Ainsi lors de l'acquisition de la zone d'authentification sur la bouteille 100, on peut prévoir plusieurs situations possibles, et par exemple émettre un message spécifique dont le contenu est relatif à l'une des situations suivantes :
- Situation 1 : l'empreinte de l'image test est identique à l'empreinte de l'image de référence (celle de la bouteille 100 prête à entrer dans le circuit de distribution) ; la bouteille 100 est authentique ; le récipient 10 n'a probablement pas été ouvert ;
- Situation 2 : l'empreinte de l'image initiale est reconnue mais l'empreinte de l'image test ne correspond pas à l'empreinte de l'image de référence, ou la bouteille 100 présente une absence totale de manchon ; alors le manchon a été probablement manipulé (remplacé, enlevé ou autre). La bouteille 100 n'est pas conforme à sa mise dans le circuit de distribution, il existe un risque que la bouteille 100 ait été ouverte / manipulée, il existe un risque de fraude ;
- Situation 3 : l'empreinte de l'image test ne correspond pas à l'empreinte de l'image de référence alors qu'il existe un manchon et l'empreinte de l'image initiale n'est pas reconnue; la bouteille 100 a été ouverte (manchon retiré et éventuellement remplacé par un manchon complètement transparent) ; il existe un risque de fraude, la bouteille 100 est probablement contrefaite.

On peut prévoir une étape de redressement de l'image test préalablement à l'étape de comparaison. Par exemple, on peut prévoir que l'étiquette de sécurité 30 comprend des amers 32, ou que les contours de l'étiquette de sécurité 30, dont la forme et les dimensions sont connues, sont utilisés comme amers pour les calculs de redressement. Lorsque la bouteille 100 comprend un code-barres 2D, les amers dudit code-barres peuvent également être avantageusement utilisés pour l'étape de redressement de l'image test.

L'invention n'est pas limitée aux modes de réalisation précédemment décrits.

On peut par exemple prévoir :
- une étape de calcul et d'enregistrement du résultat d'une fonction de hashage de l'empreinte de l'image de référence,
- une étape de calcul et d'enregistrement du résultat de la même fonction de hashage de l'empreinte de l'image test, puis
- une étape de comparaison des résultats de ces deux fonctions de hashage,
ce qui ajoute un niveau de sécurité supplémentaire.

Grâce à la présente invention, une bouteille 100 peut alors présenter une combinaison des fonctions authentification, de témoin d'inviolabilité et de témoin d'ouverture.

Lors du contrôle en fin de chaîne d'embouteillage ou lors d'un contrôle en magasin par un contrôleur agréé, tous les éléments nécessaires à un contrôle complet sont visibles/accessibles.

Ainsi, grâce à la présente invention, la mise en oeuvre de la sécurisation d'une bouteille 100 est facilitée grâce :
- à un geste de contrôle unique (prise de vue d'une image test),
- aux dimensions limitées la zone de contrôle (étiquette de sécurité 30 et manchon qui sont nécessairement à proximité l'un de l'autre) ;
- à l'unicité de la zone de contrôle quel que soit l'état de la bouteille 100 ; et
- à l'unicité de l'élément de traçabilité, par exemple un identifiant unique.

Il est possible dans certains cas (par exemple une importation par un importateur unique) que la pose du manchon soit placée sous la responsabilité d'une autre personne que celle responsable du bouchage (pose de l'élément de fermeture 20 par un embouteilleur) et de la pose de l'étiquette de sécurité 30. L'étape de pose du manchon peut être mise en oeuvre indépendamment de l'étape de bouchage sans qu'il soit nécessaire que le poseur de manchon ait accès aux informations de l'embouteilleur.

### Nomenclature

| | | |
|---|---|---|
| 100 | Bouteille 100 | |
| 10 | Récipient | |
| 11 | | Etiquette de marquage du récipient |
| 20 | Elément de fermeture | |
| 30 | Etiquette de sécurité | |
| 31 | | élément d'authentification optique de l'étiquette de sécurité |
| 32 | | amer de l'étiquette de sécurité |
| 33 | | Identifiant de l'étiquette de sécurité |
| 40 | Elément de recouvrement | |
| 41 | | Elément de marquage de l'élément de recouvrement |
| 50 | Prédécoupe | |
| 60 | Point remarquable | |

## Revendications

1. Bouteille (100) comprenant :
• un récipient (10),
• un élément de fermeture (20) dudit récipient (10), ledit récipient (10) étant fermé par ledit élément de fermeture (20),
• une étiquette de sécurité (30), comprenant un premier ensemble d'au moins un élément d'authentification optique comprenant un identifiant, l'étiquette de sécurité (30) étant solidaire d'au m_M1oins l'un parmi le récipient (10) et l'élément de fermeture (20), et
• un élément de recouvrement (40) sous forme d'un manchon (40), recouvrant au moins partiellement l'étiquette
de sécurité (30), et au moins partiellement au moins l'un parmi : le récipient (10)
et l'élément de fermeture (20) dudit récipient (10),
dans laquelle l'élément de recouvrement (40),
• est solidaire au moins de l'élément de fermeture (20),
• est au moins partiellement transparent,
• est disposé de sorte que l'étiquette de sécurité (30) peut être observée en transparence à travers celui-ci
**caractérisée en ce que**
l'élément de recouvrement (40) comprend un ensemble d'au moins un élément de marquage, ledit élément de marquage (41) de l'élément de recouvrement (40) comprenant au moins l'un parmi :
- un motif prédéterminé, par exemple générique, réalisé de préférence en amont de la pose dudit manchon,
- un marquage laser ou marquage jet d'encre ou encore un marquage par transfert thermique, unique ou de série, réalisé de préférence au moment de la pose du manchon,
- un filigrane digital,
- une pré-découpe sous forme par exemple de pointillés continus dans un sens prédéterminé, et
- un ensemble d'éléments inducteurs de déformation optique par observation en transmission, par exemple des bulles, des lentilles concaves ou convexes.

2. Bouteille (100) selon la revendication 1, dans laquelle l'élément de recouvrement (40) comprend un ensemble d'au moins un élément optique qui, par superposition à l'étiquette de sécurité (30), modifie localement l'apparence de celle-ci.

3. Bouteille (100) selon l'une quelconque des revendications précédentes, dans laquelle au moins l'un parmi l'étiquette de sécurité (30) et l'élément de recouvrement (40) comprend une prédécoupe (50).

4. Bouteille (100) selon l'une quelconque des revendications précédentes, dans laquelle l'étiquette de sécurité (30) comprend au moins l'un parmi :
• Un élément d'authentification, et
• Un élément de traçabilité.

5. Bouteille (100) selon l'une quelconque des revendications précédentes, dans laquelle l'étiquette de sécurité (30) est au moins partiellement destructible et/ou modifiable définitivement.

6. Procédé de sécurisation d'une bouteille (100) selon l'une quelconque des revendications précédentes, comprenant une étape consistant à :
Enregistrer dans une mémoire d'un serveur sécurisé au moins l'une parmi :
* une image de référence, ladite image de référence étant une prise de vue de
- l'étiquette de sécurité (30) observée en transparence à travers l'élément de recouvrement (40); et
- d'au moins un élément de marquage de l'élément de recouvrement (40) ; et
* une empreinte numérique de l'image de référence ;
le procédé comprenant optionnellement en outre une étape consistant à :
Enregistrer dans une mémoire du serveur sécurisé au moins l'une parmi :
* une image initiale, ladite image initiale étant une prise de vue de l'étiquette de sécurité (30) ; et
* une empreinte numérique de l'image initiale.

7. Procédé d'authentification d'une bouteille (100) sécurisée selon la revendication précédente, comprenant des étapes consistant à :
Enregistrer dans une mémoire d'un serveur sécurisé au moins une image test de la bouteille (100), ladite image test étant une prise de vue de
- l'étiquette de sécurité (30) observée en transparence à travers l'élément de recouvrement (40) ; et
- d'au moins un élément de marquage de l'élément de recouvrement (40) ;
- Calculer une empreinte numérique de l'image test ; et
- Comparer ladite image test à ladite image de référence, ou l'empreinte numérique de l'image test à l'empreinte numérique de l'image de référence ;
le procédé comprenant optionnellement une étape consistant à redresser l'image test, préalablement au calcul de l'empreinte de l'image test.

8. Procédé selon la revendication 7, dans lequel l'étape d'enregistrement est mise en oeuvre au plus tard à la mise dans le commerce de la bouteille (100) ; et l'étape de comparaison est mise en oeuvre au plus tôt à la mise dans le commerce de la bouteille (100).

9. Programme d'ordinateur comprenant des instructions de code de programme pour l'exécution des étapes du procédé selon l'une quelconque des revendications 6 à 8, lorsque ledit programme est exécuté sur un ordinateur.

## Patentansprüche

1. Flasche (100), welche umfasst:
• einen Behälter (10),
• ein Verschlusselement (20) des Behälters (10), wobei der Behälter (10) durch das Verschlusselement (20) verschlossen ist,
• ein Sicherheitsetikett (30), das eine Anordnung mindestens eines optischen Authentifizierungselements umfasst, die eine Kennung umfasst, wobei das Sicherheitsetikett (30) mit dem Behälter (10) und/oder dem Verschlusselement (20) fest verbunden ist, und
• ein Abdeckelement (40) in Form einer Hülse (40), die das Sicherheitsetikett (30) wenigstens teilweise bedeckt und den Behälter (10) und/oder das Verschlusselement (20) des Behälters (10) wenigstens teilweise bedeckt,
wobei das Abdeckelement (40)
• mindestens mit dem Verschlusselement (20) fest verbunden ist,
• wenigstens teilweise durchsichtig ist,
• so angeordnet ist, dass das Sicherheitsetikett (30) mittels Transparenz durch es hindurch betrachtet werden kann,
**dadurch gekennzeichnet, dass**
das Abdeckelement (40) eine Anordnung mindestens eines Markierungselements umfasst, wobei das Markierungselement (41) des Abdeckelements (40) mindestens eines umfasst von:
• einem vorbestimmten, zum Beispiel generischen Muster, das vorzugsweise vor der Anbringung der Hülse hergestellt wird,
• einer Lasermarkierung oder Tintenstrahlmarkierung oder auch einer Markierung durch Thermotransfer, einzeln oder als Reihe, die vorzugsweise zum Zeitpunkt der Anbringung der Hülse hergestellt wird,
• einem digitalen Wasserzeichen,
• einer Vorstanzung, in Form zum Beispiel einer gestrichelten Linie in einer vorbestimmten Richtung, und
• einer Anordnung von Elementen, die durch Betrachtung in Transmission eine optische Verformung hervorrufen, zum Beispiel Bläschen, konkave oder konvexe Linsen.

2. Flasche (100) nach Anspruch 1, wobei das Abdeckelement (40) eine Anordnung mindestens eines optischen Elements umfasst, das durch Überlagerung des Sicherheitsetiketts (30) das Aussehen desselben lokal verändert.

3. Flasche (100) nach einem der vorhergehenden Ansprüche, wobei das Sicherheitsetikett (30) und/oder das Abdeckelement (40) eine Vorstanzung (50) umfassen.

4. Flasche (100) nach einem der vorhergehenden Ansprüche, wobei das Sicherheitsetikett (30) mindestens eines umfasst von:
• einem Authentifizierungselement und
• einem Rückverfolgbarkeitselement.

5. Flasche (100) nach einem der vorhergehenden Ansprüche, wobei das Sicherheitsetikett (30) wenigstens teilweise zerstörbar und/oder dauerhaft veränderbar ist.

6. Verfahren zur Sicherung einer Flasche (100) nach einem der vorhergehenden Ansprüche, welches einen Schritt umfasst, bestehend im:
Speichern, in einem Speicher eines sicheren Servers, mindestens eines von:
* einem Referenzbild, wobei das Referenzbild eine Aufnahme ist
- des Sicherheitsetiketts (30), betrachtet mittels Transparenz durch das Abdeckelement (40) hindurch; und
- mindestens eines Markierungselements des Abdeckelements (40); und
* einem digitalen Fingerabdruck des Referenzbildes;
wobei das Verfahren optional außerdem einen Schritt umfasst, bestehend im:
Speichern, in einem Speicher des sicheren Servers, mindestens eines von:
* einem Anfangsbild, wobei das Anfangsbild eine Aufnahme des Sicherheitsetiketts (30) ist; und
* einem digitalen Fingerabdruck des Anfangsbildes.

7. Verfahren zur Authentifizierung einer nach dem vorhergehenden Anspruch gesicherten Flasche (100), welches Schritte umfasst, bestehend im:
Speichern, in einem Speicher eines sicheren Servers, mindestens eines Testbildes der Flasche (100), wobei das Testbild eine Aufnahme ist
- des Sicherheitsetiketts (30), betrachtet mittels Transparenz durch das Abdeckelement (40) hindurch; und
- mindestens eines Markierungselements des Abdeckelements (40);
- Berechnen eines digitalen Fingerabdrucks des Testbildes; und
- Vergleichen des Testbildes mit dem Referenzbild oder des digitalen Fingerabdrucks des Testbildes mit dem digitalen Fingerabdruck des Referenzbildes;
wobei das Verfahren optional einen Schritt umfasst, der darin besteht, das Testbild vor der Berechnung des Fingerabdrucks des Testbildes aufzurichten.

8. Verfahren nach Anspruch 7, wobei der Schritt des Speicherns spätestens beim Inverkehrbringen der Flasche (100) durchgeführt wird; und der Schritt des Vergleichens frühestens beim Inverkehrbringen der Flasche (100) durchgeführt wird.

9. Computerprogramm, welches Programmcodeanweisungen für die Ausführung der Schritte des Verfahrens nach einem der Ansprüche 6 bis 8, wenn das Programm auf einem Computer ausgeführt wird, umfasst.

## Claims

1. Bottle (100) comprising:
• a receptacle (10),
• an element (20) for sealing said receptacle (10), said receptacle (10) being sealed by said sealing element (20),
• a security label (30), comprising a first set of at least one optical authentication element comprising an identifier, the security label (30) being securely fastened to at least one among the receptacle (10) and the sealing element (20), and
• a covering element (40) taking the form of a sleeve (40), at least partially covering the security label (30), and at least partially at least one among: the receptacle (10) and the element (20) for sealing said receptacle (10),
in which the covering element (40),
• is securely fastened at least to the sealing element (20),
• is at least partially transparent,
• is placed so that the security label (30) is able to be observed by transparency therethrough
**characterized in that**
the covering element (40) comprises a set of at least one marking element, said marking element (41) of the covering element (40) comprising at least one among:
• a predetermined pattern, for example a generic pattern, preferably produced before said sleeve is fitted,
• a laser marking or inkjet marking or even a marking produced by thermal-transfer printing, which is either unique or batch-produced, and preferably produced when the sleeve is fitted,
• a digital watermark,
• a pre-scored or pre-perforated zone taking the form, for example, of continuous perforations in a predetermined direction, and
• a set of elements inducing optical deformation when observed in transmission, for example bubbles or concave or convex lenses.

2. Bottle (100) according to Claim 1, wherein the covering element (40) comprises a set of at least one optical element that, by superposition on the security label (30), modifies the appearance thereof locally.

3. Bottle (100) according to any one of the preceding claims, wherein at least one among the security label (30) and the covering element (40) comprises a pre-scored or pre-perforated zone (50).

4. Bottle (100) according to any one of the preceding claims, wherein the security label (30) comprises at least one among:
• an authentication element, and
• a traceability element.

5. Bottle (100) according to any one of the preceding claims, wherein the security label (30) is at least partially destructible and/or definitively modifiable.

6. Method for securing a bottle (100) according to any one of the preceding claims, comprising a step of:
saving to a memory of a secure server at least one among:
* a reference image, said reference image being a shot of
- the security label (30) observed by transparency through the covering element (40); and
- at least one marking element of the covering element (40); and
* a digital fingerprint of the reference image;
the method optionally further comprising a step of:
saving to a memory of the secure server at least one among:
* an initial image, said initial image being a shot of the security label (30); and
* a digital fingerprint of the initial image.

7. Method for authenticating a secure bottle (100) according to the preceding claim, comprising steps of:
storing in a memory of a secure server at least one test image of the bottle (100), said test image being a shot of
- the security label (30) observed by transparency through the covering element (40); and
- at least one marking element of the covering element (40); and
- computing a digital fingerprint of the test image; and
- comparing said test image with said reference image, or the digital fingerprint of the test image with the digital fingerprint of the reference image;
the method optionally comprising a step of straightening the test image, prior to computing the fingerprint of the test image.

8. Method according to Claim 7, wherein the storing step is implemented at the latest when the bottle (100) is put on the market; and the comparing step is implemented at the earliest when the bottle (100) is put on the market.

9. Computer program comprising program-code instructions for executing the steps of the method according to any one of Claims 6 to 8, when said program is executed on a computer.
